# EUROPEAN PATENT APPLICATION

(11) **EP 0 974 918 A2**
(43) Date of publication of application: **26.01.2000**
(21) Application number: 99113509.6
(22) Date of filing: 02.07.1999
(51) Int. Cl.: G06F 17/60

(54) **Electronic label for displaying a price**

(30) Priority: 17.07.1998 IT MI980497
(71) Applicant: Brentini, Attilio, CH-1009 Pully (CH)
(72) Inventor: Brentini, Attilio, CH-1009 Pully (CH)
(74) Representative: Petruzzelli, Antonio European Patent Attorney

(57) **Abstract**

A label for displaying a price of an item of goods in local and/or foreign currency and if necessary any information relating to the quality, weight, size, origin and the like of said goods, in the form of an electronic label controlled by remote control, said electronic label comprising a receiver of an infrared signal from said remote control, an electronic module for the conditioning of said infrared signal received, a microcontroller which receives the conditioned signal and manages the information contained therein, and at least one display which receives and displays the information coming from said microcontroller, said remote control being of the type comprising a keyboard with numbers, letters and functions keys, means for the generation, coding and transmission of the information to be carried in said infrared signal, and also comprising a memory for the storage of the information.

## Description

The present invention relates to an electronic label which displays the price of a product in local currency, if necessary with the corresponding price in foreign currency, or which displays, together with the price, a series of information concerning the product itself, that is to say quality, type, size, weight, origin and the like.

The traditionally known labels for displaying the price consist of a plastic strip whereon housings are longitudinally aligned for the insertion of inserts, each of which shows a figure or a letter which, associated with the preceding and subsequent figures and/or letters, forms the item of data to be displayed.

The disadvantages found in this traditional embodiment concern above all the excessive waste of time required for rectifying the information displayed on the label, given that one insert has to be removed manually at a time.

This is in addition to the fact that, during the change of an item of data, the operator each time finds that he or she has to reconfigure in the label a plurality of different inserts with consequent risk of errors, consisting for example in the inverting of two consecutive figures.

The frequent change in prices, due to the fluctuating trend of markets, of inflation and also of the frequently varying strategic policies, also requires that staff be constantly taken away from other tasks so as to update the labels in good time.

A further disadvantage of the traditional label described above lies in the extreme ease of tampering with the data, given that the mechanism of removal, movement and replacement of the inserts can easily be reconstructed also by unskilled persons.

It should finally be noted that a serious impediment to the replacement of the data of a label can at times arise from its positioning in relation to the product identified thereby. In department stores or shops wherein the goods are displayed on very high racks with several shelves or even on the ceiling, the latter being the case for lamps or the like, the labels are often only visible but difficult to reach unless with the aid of special stools of ladders.

A scarce and in any case not immediate accessibility for the operator contributes in turn to increasing even further the times of intervention, thus excessively complicating management of the data of the labels.

The object of the present invention is therefore that of providing a label for displaying prices which avoids all the aforementioned disadvantages of a traditional label, and in particular a label which allows easy management of the data contained therein.

Another object of the present invention is that of providing a label which protects the data contained therein from undesirable tampering.

These objects are achieved with an electronic label and relevant remote control of the type described in the indipendent claims listed hereinunder.

This electronic label is characterised by the fact of processing and displaying data which have been transmitted by an infrared optical source placed at a distance.

The possibility of managing the data electronically, for example during the phases of insertion or updating of prices in local and foreign currency, makes the operations extremely fast and absolutely accurate.

The use of infrared remote control avoids having to handle the label directly, in such a way that its management is not strictly linked to its accessibility.

The present invention will be made clearer by reading the description of some embodiments which refer to the accompanying drawings, in which:
Fig. 1 represents an external view of a first preferred embodiment according to the present invention of an electronic label which displays a price in local currency;
Fig. 2 represents an external view of a second preferred embodiment in accordance with the present invention of an electronic label which displays a price in local currency and in another foreign currency;
Fig. 3 represents a block diagram of a first electronic embodiment of an electronic label according to the present invention, wherein the circuit can be made with discrete components;
Fig. 4 represents a block diagram of a second electronic embodiment of an electronic label in accordance with the present invention, wherein the circuit is made with a smaller number of discrete components;
Fig. 5 represents a schematic view of a remote control according to a first preferred embodiment, comprising a liquid crystal display, an infrared emitter, and a keyboard composed of numerical and of specific functions keys.
Fig. 6 represents a schematic view of a remote control in accordance with another embodiment of the present invention.

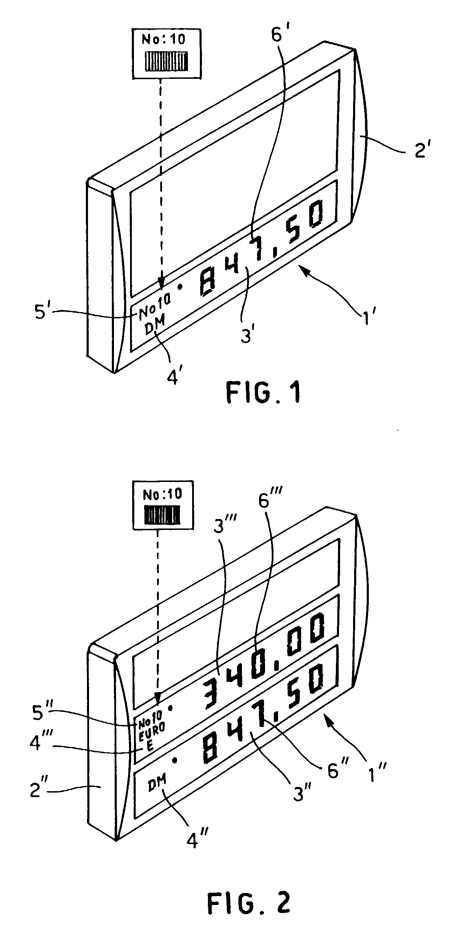

Figs. 1 and 2 show two embodiments 1' and 1'' of the electronic label, which is presented in the form of a container 2' and 2'' in a plastic material provided with one 3', or two 3'', 3''' liquid crystal displays. To the left of the displays the type of currency, for example German marks 4' and 4'' and Euro 4''', in this embodiment, and the number or code 5' and 5'' of the electronic label 1' and 1'' are represented.

Again on the front part of the electronic label 1' and 1'', an infrared ray receiver diode is positioned for receiving the data, and this type of receiving-transmission allows any connection with electric wires between remote control and label to be eliminated.

Inside the container 2' and 2'' in plastic there is a printed circuit whereon a plurality of electronic components are housed for functioning of the label, the display 3' or the liquid crystal displays 3'', 3''' and at least one battery, which in turn supplies power to the label 1' and 1'' without necessarily using electrical power supply wires, and therefore without the need for any electrical connection with other modules or installations.

The label 1' and 1'' can therefore be positioned in any place as the user requires and function totally independently.

The dimensions of the container 2' and 2'' and of the displays 3', 3'' and 3''' vary by a few millimetres to a few centimetres, according to the applications and needs of the market.

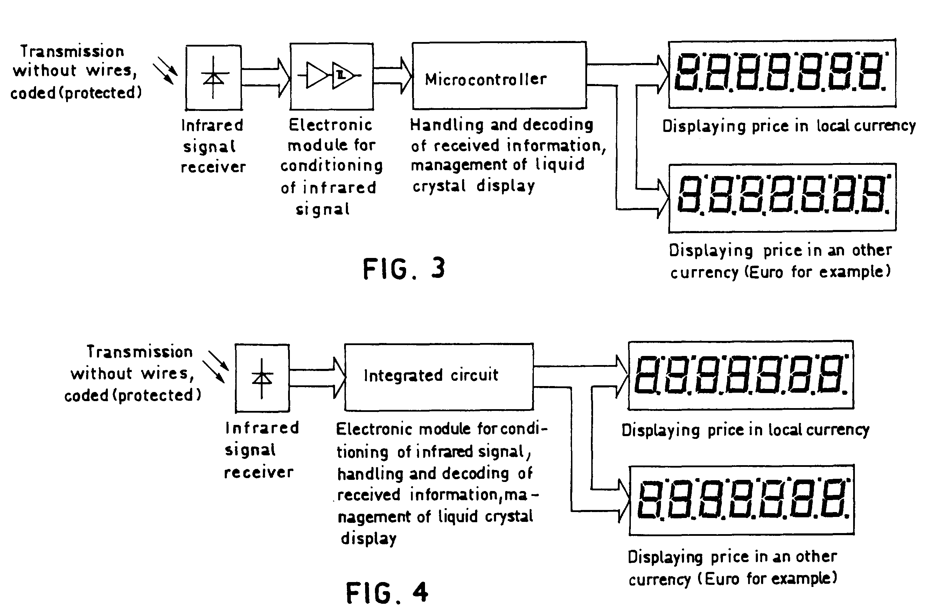

The functioning of the electronic label 1' and 1'' complies with the block diagram illustrated in Fig. 3.

The device described comprises one 3' or two 3'', 3''' liquid crystal displays for displaying the price in local currency 6' and 6'' or in another currency 6''', for example in EURO.

These displays 3', 3'' and 3''' are managed by a microcontroller whose function is also that of handling all the information relating to the price, the code of the label and the decoding of the information transmitted by the remote control 7.

The data handled by the microcontroller are supplied thereto by an electronic module for conditioning the infrared signal in turn received thanks to an infrared rays receiver diode.

The other version of the embodiment of the electronic label illustrated in Fig. 4 has the same functions compared to the device described previously, but the microcontroller and the infrared signal conditioning module are integrated in the same integrated circuit or silicon chip so as to increase the energy saving and reduce the cost of manufacture of the electronic label.

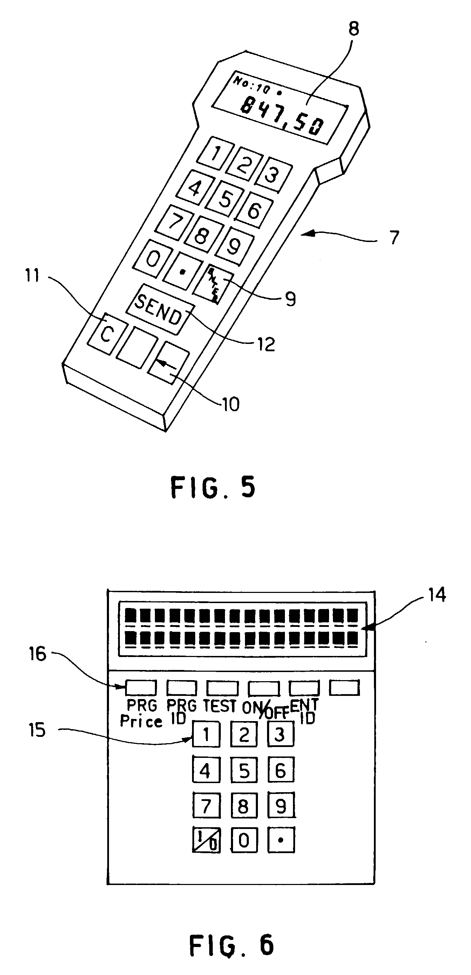

Fig. 5 shows a view of the remote control 7 which is an independent portable device.

Its use is extremely simple given that it does not even need connections to a personal computer.

The presence of a liquid crystal display 8 in this embodiment is not generally compulsory.

The code of the label or of the price is acquired via the numerical keys and the ENTER key 9.

The backspace (left-pointing arrow) key 10 allows corrections to be made if necessary.

The C key 11 allows any item of data previously stored in the memory to be deleted.

Following acquiring of the code of the label and of the new price, the SEND key 12 allows the data to be transmitted to the electronic label.

This transmission of information takes place naturally without wires, thanks to the infrared emitter of the remote control.

The change in price by a label strictly depends on the recognition of its code.

For security reasons the infrared rays transmission is protected by means of a special modulation or coding of the signal sent or by means of a secret code programmed beforehand by the user.

Optionally it can also be decided to supply the remote control with an access code so as to avoid its inappropriate use.

According to an embodiment complementary to the previous ones, it is possible to provide a remote control which records beforehand a whole series of codes of labels and of corresponding prices. In these cases the data are acquired manually on the remote control or by electrically connecting the latter to a database.

Fig. 6 shows another embodiment of a remote control according to the present invention which can perform different functions.

In particular the remote control of Fig. 6 is powered by a battery (not shown) and comprises a liquid crystal display 14 of the 2x16 characters type, the number keys 15 from 0 to 9 for entering the values of the price and of the identification code, and the function keys 16 which we will describe briefly.

A first programming key, indicated by "PRG PRICE", is for programming information, whose transmission to the label must always be preceded by the keying-in of the code of identification of the label itself.

A second key, indicated by "PRG ID", is for the programming of the code of identification of the label.

A third key, indicated by "TEST", is for switching on and testing all the segments of the display of the label. This operation does not require the simultaneous transmission of the code of identification of the label.

A fourth key, indicated by "ON/OFF", is for switching a label on and off without losing the information memorised therein. This function is useful for reducing energy consumption when the label is not used.

A fifth key, indicated by "ENT ID", is for showing on the display of the label the identification code of the same label. This function is useful for reconstructing or simply checking said code.

It is understood that the embodiments described above are given by way of a non-limiting example of the present invention, it being possible for example to introduce some changes in the number or in the type of functions which can be performed by the remote control without thereby departing from the concept claimed.

## Claims

1. A label for displaying a price of an item of goods in local and/or foreign currency and if necessary any information relating to the quality, weight, size, origin and the like of said goods, characterised in that it is in the form of an electronic label controlled by a remote control, said electronic label comprising a receiver of a light signal from said remote control, an electronic module for conditioning said light signal received, a microcontroller for receiving the conditioned signal and managing the information contained therein, and at least one display for receiving and displaying the information coming from said microcontroller.

2. An electronic label according to claim 1, characterised in that said receiver of a light signal is formed by an infrared signal receiver diode.

3. An electronic label according to any one of the previous claims, characterised in that said one display at least is in the form of at least one liquid crystal display (3', 3'', 3''').

4. An electronic label according to any of the previous claims, characterised in that it provides an identification code (5', 5'') which can be programmed and read by said remote control, said identification code enabling said label to receive and update the information coming from said remote control.

5. An electronic label according to any one of the previous claims, characterised in that it comprises a power supply battery, in such a manner to avoid electrical connections to other modules or external installations.

6. An electronic label according to any one of the previous claims, characterised in that said module for conditioning the signal and said microcontroller are integrated in the same integrated circuit.

7. A remote control for controlling the electronic label described in any of previous claims, of the type comprising a keyboard with numbers, letters and functions keys, characterised in that it further comprises means for the generation, coding and transmission of the information to be carried in said light signal, and a memory for storing information.

8. A remote control for controlling the electronic label according to the previous claim, characterised in that said light signal is an infrared signal.

9. A remote control for controlling the electronic label according to claims 7 and 8, characterised in that it comprises at least one display (8, 14) for displaying the information processed.

10. A remote control for controlling the electronic label according to claims 7, 8 and 9, characterised in that it provides specific coding or modulation for the protection of said infrared signal.

11. A remote control for controlling the electronic label according to claims 7, 8 and 9, characterised in that it provides a secret code which can be programmed beforehand for the protection of said infrared signal.

12. A remote control for controlling the electronic label according to any claim from 7 to 11, characterised in that it provides an access code, said access code enabling said remote control to receive the information from the outside.

13. A remote control for controlling the electronic label according to any claim from 7 to 12, characterised in that the information is acquired manually via said remote control.

14. A remote control for controlling the electronic label according to any claim from 7 to 12, characterised in that the information is acquired by electrically connecting said remote control to a database.
